# EUROPÄISCHE PATENTANMELDUNG

(11) **EP 1 239 276 A2**
(43) Veröffentlichungstag der Anmeldung: **11.09.2002**
(21) Anmeldenummer: 02004574.6
(22) Anmeldetag: 28.02.2002
(51) Int. Cl.: G01M 17/007

(54) **Einrichtung zum Fernbetrieb von Prüfgeräten in der Kraftfahrzeugwartung**

(30) Priorität: 01.03.2001 DE 10109810
(71) Anmelder: ROBERT BOSCH GMBH, 70442 Stuttgart (DE)
(72) Erfinder: Egle, Karl, 73230 Kirchheim/Teck (DE)

(57) **Zusammenfassung**

Die Erfindung beschreibt eine Einrichtung zum Fernbetrieb von Geräten (2, 3, 5), insbesondere von Prüfgeräten und Prüfständen in der Kraftfahrzeugwartung. Zum Fernbetrieb der Geräte ist ein mobiles Kommunikationsgerät (1) vorgesehen, bei dem neben der verbalen Kommunikation über eine Mobilfunkstation (4) sowie gegebenenfalls der sichtbaren Anzeige von Information, ein separater Übertragungskanal vorgesehen ist. Signale zur Betätigung der fernbetriebenen Geräte, wie insbesondere der Prüf- oder Testgeräte, werden auf dem separaten Übertragungskanal, der insbesondere der kostenfrei benutzbare lokale Kanal sein kann, übertragen. Auf dem Anzeigefeld des mobilen Kommunikationsgeräts sind entsprechende Aus- und Anwahlmöglichkeiten vorgesehen und eingerichtet und bei Betrieb des mobilen Kommunikationsgeräts als Steuergerät für fernbetriebene Geräte sind automatisch Eingabemittel des mobilen Kommunikationsgeräts in entsprechende Funktionsmittel verwandelt. Jedes fernbetriebene Gerät ist mit einem Funkmodul versehen.

## Beschreibung

### Stand der Technik

Die Erfindung geht aus von einer Einrichtung zum Fernbetrieb, sogenannter Remote-Betrieb, von Geräten, insbesondere von Prüfgeräten und Prüfständen in der Kraftfahrzeugwartung, der im Oberbegriff des Anspruchs 1 definierten Gattung.

Diagnosetestvorrichtungen für Kraftfahrzeuge, die Steuergeräte enthalten, sind allgemein bekannt. Solche Steuergeräte können Eigendiagnosemittel enthalten. Sie steuern und überwachen die Motorsteuerung und andere Systeme des Kraftfahrzeugs. In Eigendiagnose werden Fehlercodes generiert und diese abgespeichert. Über einen Kraftfahrzeug-seitigen Diagnose/Prüfstecker sind diese Steuergeräte und die Fehlercodespeicher mit einem externen Diagnosetester verbindbar.

Aus der DE 44 46 512 A1 ist eine Vorrichtung zur Durchführung von Fahrzeugtests bekannt, bei welcher der Anschluß des Kraftfahrzeug-seitigen Diagnose-/Prüfsteckers nicht über ein Kabel mit einem in der Werkstatt vorhandenen Diagnosetester verbunden wird, sondern über ein im Kraftfahrzeug selbst befindliches Telefon, so daß die Übertragung der Fehlerdiagnosecodes über das Mobilfunknetz zu einer Stelle in einer Werkstatt erfolgt, die dann den Test durchführt. Dadurch können Werkstattaufenthalte vermieden werden und es können auch Tests bei fahrendem Fahrzeug durchgeführt werden. Diese bekannte Vorrichtung ersetzt also die normale Kabelverbindung zwischen Kraftfahrzeug und Diagnosetester in der Werkstatt durch mobile Kommunikation.

In der DE 199 21 846.3 ist eine Diagnosetestvorrichtung mit portablem Prüfgerät für Kraftfahrzeuge beschrieben, wobei im Kraftfahrzeug Steuergeräte mit Eigendiagnosemittel vorgesehen sind, welche die Motorsteuerung und andere Systeme des Kraftfahrzeugs steuern, überwachen, Fehlercodes generieren und diese abspeichern und welche über einen Kraftfahrzeug-seitigen Diagnose-/Prüfstecker mit einem externen Prüfgerät verbindbar sind. Entsprechend dieser Anmeldung ist vorgeschlagen, das externe portable Prüfgerät mit einem Modem auszustatten und an ein mobiles Telefon, insbesondere ein sogenanntes Handy, anzuschließen, um somit in einer dergestalt aufgebauten Vernetzung außerhalb von festen Werkstätten Fehlerdiagnose und Störungsbehebung durchführen zu können.

In der DE 199 21 845.5 ist eine Diagnosetestvorrichtung für Kraftfahrzeuge beschrieben, wobei im Kraftfahrzeug programmierbare Steuergeräte mit Eigendiagnosemittel vorgesehen sind, welche programmgesteuert die Motorsteuerung und andere Systeme des Kraftfahrzeugs steuern, überwachen, Fehlercodes generieren und diese abspeichern, und welche über einen Kraftfahrzeug-seitigen Diagnose-/Prüfstecker mit einem externen Diagnosetester verbindbar sind. Entsprechend dieser Anmeldung ist vorgeschlagen, den externen Diagnosetester mit einer Programmerkennungs- und Programmladevorrichtung auszustatten. Mittels dieser Programmerkennungsvorrichtung wird die im angeschlossenen Steuergerät enthaltene Programmversion abgefragt und erkannt. Dann, wenn das Kraftfahrzeug-seitig vorhandene und über den Diagnose-/Prüfstecker erkannte, im angeschlossenen Steuergerät des Kraftfahrzeugs vorhandene Programm nicht in der neuesten und aktuellsten Version abgespeichert ist, wird von der Programmladevorrichtung des Diagnosetesters die jeweils aktuellste Version in den Programmspeicher des entsprechenden Steuergerätes geladen. Dabei kann die Kommunikation über Standleitung oder drahtlos über mobile Telekommunikation von der Werkstatt oder dem Kraftfahrzeug selbst erfolgen.

Aus der DE 195 15 355 A1 ist eine Vorrichtung zum Ansteuern einer Fahrzeugzusatzeinrichtung, insbesondere eines Fahrzeugheizgerätes, bekannt, bei der mittels unidirektionaler Funkfernsteuerung über das öffentliche Telephonnetz mit örtlichem Funkrufnetz die Zusatzeinrichtung aktiviert oder deaktiviert wird. Dazu wird eine unidirektionale numerische Nachricht auf einen der Steuereinrichtung der Fahrzeugzusatzeinrichtung zugeordneten Mobilfunkempfänger drahtlos übertragen und als Codewort zum Ansteuern verwendet. Eine Rückmeldung über Zustand oder Werte ist hier nicht möglich.

### Vorteile der Erfindung

Die erfindungsgemäße Einrichtung zum Fernbetrieb, sogenannter Remote-Betrieb, von Geräten, insbesondere von Prüfgeräten und Prüfständen in der Kraftfahrzeugwartung, mit den kennzeichnenden Merkmalen des Anspruchs 1 hat gegenüber dem Stand der Technik den Vorteil, dass mit nur einem mobilen Kommunikationsgerät neben der internen und externen Kommunikation auch Geräte bedient werden können. Durch die bidirektionale Funkstrecke ist es zudem möglich, Zustände oder Messwerte auf dem Anzeigetableau des mobilen Kommunikationsgerätes anzuzeigen.

Gemäß der Erfindung wird dies prinzipiell dadurch erreicht, dass zum Fernbetrieb der Geräte ein mobiles Kommunikationsgerät vorgesehen ist, bei dem neben der verbalen Kommunikation sowie gegebenenfalls der sichtbaren Anzeige von Information, ein separater Übertragungskanal vorgesehen ist, Signale zur Betätigung der fernbetriebenen Geräte, wie insbesondere der Prüf- oder Testgeräte, auf dem separaten Übertragungskanal übertragbar sind, auf dem Anzeigefeld des mobilen Kommunikationsgeräts entsprechende Aus- und Anwahlmöglichkeiten vorgesehen und eingerichtet sind, bei Betrieb des mobilen Kommunikationsgeräts als Steuergerät für fernbetriebene Geräte automatisch Eingabemittel des mobilen Kommunikationsgeräts in entsprechende Funktionsmittel verwandelt sind, und jedes fernbetriebene Gerät mit einem Funkmodul versehen ist.

Durch die in den weiteren Ansprüchen niedergelegten Maßnahmen sind vorteilhafte Weiterbildungen und Verbesserungen der im Anspruch 1 angegebenen Einrichtung möglich.

Entsprechend einer vorteilhaften Ausgestaltung der erfindungsgemäßen Einrichtung ist das mobile Kommunikationsgerät und das am fernbetriebenen Gerät angeschlossene Funkmodul mit einer Kennung konfiguriert.

Gemäß einer besonders vorteilhaften Weiterbildung der erfindungsgemäßen Einrichtung ist vorgesehen, dass die Signale zur Betätigung der fernbetriebenen Geräte mittels desjenigen separaten Übertragungskanals, der als sogenannter lokaler Kanal kostenfrei nutzbar ist, übertragen werden und über die bidirektionale Funkstrecke Zustände und/oder Meßwerte an/von den fernbetriebenen Geräten auf dem Anzeigefeld des mobilen Kommunikationsgeräts anzeigbar sind. In zweckmäßiger Ausgestaltung dieser besonderen Weiterbildung der Erfindung ist vorgesehen, dass der lokale Kanal, der kostenfrei nutzbar ist, mit einer besonderen standardisierten Sende-Empfangs-Frequenz, wie insbesondere DECT (Digital Enhanced Cordless Telecommunication) betreibbar ist oder gemäß dem unter dem Begriff bluetooth gültigen Standard zu betreiben ist.

Eine andere vorteilhafte Ausgestaltung der Erfindung sieht vor, das mobile Kommunikationsgerät als Modem zu verwenden, um Fernwartung (z.B. GSM = Groupe Special Mobile) an Geräten durchzuführen, und gleichzeitig mit dem separaten bzw. lokalen Übertragungskanal, das fern-gewartete Gerät bedienbar ist.

Entsprechend einer weiteren vorteilhaften Ausgestaltung der erfindungsgemäßen Einrichtung werden über das mobile Kommunikationsgerät Ergebnisse des fernbetriebenen Gerätes, insbesondere eines Prüfgerätes, an einen Hostrechner übermittelt.

Eine besonders zweckmäßige Ausgestaltung und Anwendung der erfindungsgemäßen Einrichtung sieht vor, dass der für Namenseingaben vorgesehene Editor des mobilen Kommunikationsgeräts bei solchen fernbetriebenen Geräten, die keine eigene alphanumerische Eingabemöglichkeit aufweisen, dazu vorgesehen und eingerichtet ist, um Informationen, wie insbesondere Werbetexte oder Werkstattadressen, für den Ausdruck einzuspielen.

Gemäß vorteilhafter und zweckmäßiger Ausgestaltung der Erfindung ist das mobile Kommunikationsgerät mit zusätzlicher Programmierung versehen, durch welche die besonderen Funktionalitäten ausführbar sind.

In weiterer vorteilhafter Ausgestaltung und Weiterbildung der erfindungsgemäßen sind bei Betrieb des mobilen Kommunikationsgeräts als Steuergerät für fernbetriebene Geräte als Eingabemittel des mobilen Kommunikationsgeräts Eingabetasten oder eine Spracheingabevorrichtung vorgesehen und als entsprechende Funktionsmittel sind Funktionstasten oder eine entsprechend angepasste Sprachausgabevorrichtung vorgesehen.

Gemäß vorteilhafter und zweckmäßiger Ausgestaltung der Erfindung ist als mobiles Kommununikationsgerät ein mobiles Telephon, ein sogenanntes Handy, oder ein schnurloses Standardtelephon vorgesehen. In vorteilhafter Weiterbildung dieser zweckmäßigen Ausgestaltung der Erfindung ist durch die Basisstation einer Schnurlos-Telephonanlage ein schnurloses lokales Kommunikationsnetzwerk (CLAN = Cordless Local Area Network), insbesondere in einer Werkstatt, realisierbar.

### Zeichnung

Die Erfindung wird anhand der in der Zeichnung dargestellten Ausführungs- und Realisierungsbeispiele in der nachfolgenden Beschreibung näher erläutert, wobei in der
- Fig. 1: schematisch eine erste Realisierung der Erfindung mit Hilfe eines als mobiles Kommunikationsgeräts vorgesehenen mobilen Telephons, insbesondere eines sogenannten Handys, dargestellt ist;
- Fig. 2: schematisch eine zweite Realisierung der Erfindung mit Hilfe eines als mobiles Kommunikationsgeräts vorgesehenen schnurlosen Standardtelephons, dargestellt ist, und
- Fig. 3: schematisch die Auswahl von Funktionen am Anzeigetableau des schnurlosen Standardtelephons dargestellt ist.

### Beschreibung der Ausführungsbeispiele

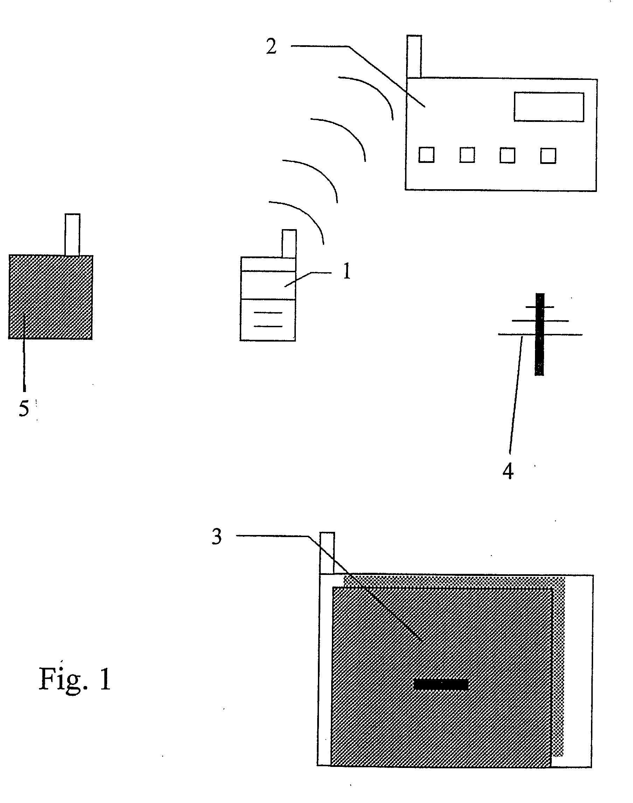

In Fig. 1 ist schematisch eine erste Realisierung der Erfindung dargestellt. Bei diesem Ausführungsbeispiel ist ein mobiles Telephon 1, insbesondere ein sogenanntes Handy, als mobiles Kommunikationsgerät vorgesehen, um mit ihm den Fernbetrieb, der auch unter dem Begriff Remote-Betrieb bekannt ist, eines Gerätes 2 oder 3 durchzuführen. Das Gerät 2 kann beispielsweise ein Abgastester und das Gerät 3 ein zu betätigendes Garagentor sein. Die Geräte 2 und 3 sind jeweils mit einem Funkmodul versehen. Das mobile Telephon 1 steht in Funkkontakt mit einer Mobilfunkstation 4 (z.B. GSM), über welche die externe verbale Kommunikation abgewickelt und zusätzlich der Funkkontakt zwischen dem mobilen Telephon 1 und dem fern zu bedienenden Gerät 2 oder 3 hergestellt wird (Modembetrieb), wobei letzterer auch direkt zwischen Handy 1 und dem jeweiligen Funkmodul der fern zu bedienenden Gerätes 2, 3, 5 erfolgen kann. Sowohl das mobile Telephon 1 als auch das jeweilige Funkmodul, das am fern zu bedienenden Gerät 2 oder 3 angeschlossen ist, ist mit einer Kennung konfiguriert, damit der einwandfreie Kontakt hergestellt werden kann.

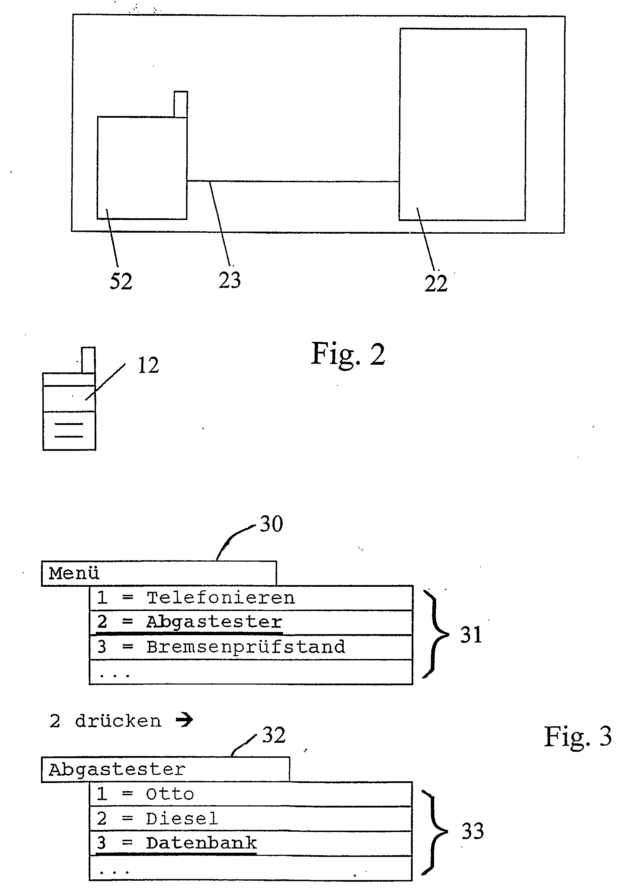

Als fern zu bedienendes Gerät kann auch die Basisstation 5 einer Schnurlos-Telephonanlage angesehen werden, welche ihrerseits Teil eines lokalen Kommunikationsnetzwerkes ist und in Verbindung mit dem mobilen Telephon 1 die interne verbale Kommunikation abdeckt. Damit kann insbesondere innerhalb einer Werkstatt mit verschiedenen Test- und Prüfgeräten durch daran adaptierte Basisstationen 52 (Fig. 2) ein sogenanntes CLAN (Connectionless Local Area Network) realisiert werden. Somit kann vom mobilen Telephon 1 aus über die Basisstation 5 eine verbale Kommunikation erfolgen, zum anderen aber ist ein Fernbetrieb der am CLAN angeschlossenen Geräte 2 möglich. betrieben werden.

Ein heute allgemein für Kommunikation zur Verfügung stehendes und genutztes mobiles Kommunikationsgerät, wie beispielsweise ein mobiles Telephon, insbesondere ein sogenanntes Handy, oder ein PDA (Persönlicher Digitaler Assistent) mit Funkanbindung, hat die Funktion der verbalen Kommunikation und/oder den Austausch von Daten über entsprechende Netze. Solche Netze sind in Deutschland unter der Bezeichnung von z.B. D1, D2, E usw., bekannt. Neuartige mobile Telephone, sogenannte Handys, bieten zudem die Möglichkeit für interne, kostenfreie Gespräche. Neben dem eigentlichen, z.B. Handy-Funkmodul (z.B. GSM = Groupe Special Mobile) ist dazu ein separater Übertragungskanal vorgesehen, der als weiterer, kostenfreier, lokaler Kanal mit einer besonderen Sende-Empfangs-Frequenz, wie beispielsweise DECT (Digital Enhanced Cordless Telecommunikation), betrieben wird. Über diese bidirektionale Funkstrecke des separaten Übertragungskanals werden Befehle und Anweisungen an die Geräte gesendet und Informationen über Zustände und/oder Meßwerte von den Geräten an das mobile Telephon 1 zurückgesandt und sind auf der Anzeige des mobilen Kommunikationsgeräts anzeigbar.

In Fig. 2 ist schematisch im Blockbild eine zweite Realisierung der Erfindung dargestellt. Dabei ist als mobiles Kommunikationsgerät ein schnurloses Standardtelephon 12, das mit einer visuellen Anzeigemöglichkeit versehen ist, vorgesehen. Dieses Standardtelephon 12 steht über sein Funkmodul, das in der Figur nicht im Detail gezeigt ist, mit einer dem Standard entsprechenden Basisstation 52 einer Schnurlos-Telephonanlage in Verbindung. Diese Basisstation 52 ist über eine Verbindungsleitung 23, die beispielsweise einer RS232 Schnittstelle entspricht, mit einem üblichen Steuerungsprozessor 22 verbunden, der seinerseits Teil eines Abgastesters ist oder ganz allgemein Teil eines anderen Prüf- oder sonstigen, fern zu bedienenden Gerätes bildet. Alle fern zu bedienenden Geräte werden bei einer derartigen Anlage mit der Basisstation 52 verbunden. Durch die Basisstation 52 einer solchen Schnurlos-Telephonanlage lässt sich somit ein schnurloses lokales Kommunikationsnetzwerk (CLAN = Cordless Local Area Network), insbesondere in einer Werkstatt, realisieren. Die vom schnurlosen Telephon 12 über Funk gesendeten Informationen und Befehle werden von der Basisstation 52 empfangen und leitungsgebunden über die Verbindung 23 an die Geräte bzw. deren Steuerung 22 weitergeleitet. Umgekehrt gelangen die Informationen und Daten von dort über die Basisstation 52 wiederum über Funk zum schnurlosen Telephon 12 und werden dort sichtbar auf der vorhandenen Anzeige gezeigt. Dazu sind auf dem Anzeigefeld des als mobiles Kommunikationsgerät verwendeten schnurlosen Telephons 12 entsprechende Aus- und Anwahlmöglichkeiten vorgesehen und eingerichtet.

In Fig. 3 ist schematisch anhand zweier verschiedener Anzeigetableaus 31 und 33, die sinngemäß sowohl für das mobile Telephon 1 aus Fig. 1 als auch für das schnurlose Telephon 12 aus Fig. 2 gelten, dargestellt, was Inhalt der Anzeige und der Gestaltung der Auswahlfunktion sein kann. Beim Drücken der mit dem Bezugszeichen 30 bezeichneten Menue-Taste erscheinen im Anzeigetableau 31 im Feld 1 die Angabe ,Telefonieren', im Feld 2 die Anzeige ,Abgastester' und im Feld 3 die Anzeige ,Bremsenprüfstand'. Weitere Felder sind nur angedeutet. Wird durch drücken des Feldes 2 mit der Anzeige ,Abgastester' diese Funktion ausgewählt, erscheint das mit dem Bezugszeichen 32 entsprechend bezeichnete Auswahlmenue, das im Anzeigetableau 33 mit drei Feldern beispielhaft dargestellt ist. Im Feld 1 erscheint die Anzeige ,Otto' als die Funktionsauswahl für Ottomotoren, im Feld 2 erscheint die Anzeige ,Diesel' als die Funktionsauswahl für Dieselmotoren, im Feld 3 erscheint die Anzeige ,Datenbank' für die damit zusammenhängende Funktionsauswahl. Weitere Felder sind nur angedeutet. In der Regel bieten heute auf dem Markt verfügbare Handys bereits eine bedienerfreundliche Menueführung für z.B. Telephonbuch, Mailbox aktivieren, Mailbox abhören, Einträge ändern, usw. Ein solches Menue ist dann, um im Bild des vorstehend genannten Beispiels zu bleiben, um den ,Abgastester' zu erweitern, d.h., wenn man diesen bedienen möchte, wird er über das Menue angewählt.

Um diese Funktionalitäten am mobilen Kommunikationsgerät verfügbar zu haben, ist erfindungsgemäß dieses derart ausgestattet, dass bei Betrieb als Steuergerät für fernbetriebene Geräte automatisch dessen Eingabemittel in entsprechende Funktionsmittel verwandelt sind. In besonders zweckmäßiger Weise ist dazu das mobile Kommnikationsgerät mit entsprechend darauf abgestimmter zusätzlicher Programmierung versehen. Den Bedientasten des Telephons werden somit individuelle Befehle zur Fernsteuerung zugeordnet. Die Tasten des Handys oder des schnurlosen Telephons sind dann gerätespezifische Funktionstasten. Eine weitere Möglichkeit zur Gestaltung der Eingabemöglichkeiten besteht auch darin, dass bei Betrieb des mobilen Kommunikationsgeräts als Steuergerät für fernbetriebene Geräte, neben den oder anstatt der Eingabetasten als Eingabemittel des mobilen Kommunikationsgeräts, eine Spracheingabevorrichtung vorgesehen ist und als entsprechende Funktionsmittel, neben den oder anstatt der Funktionstasten eine entsprechend angepasste Sprachausgabevorrichtung vorgesehen ist.

Die Erfindung ermöglicht es auch, das mobile Kommunikationsgerät als Modem zu verwenden, um Fernwartung (z.B. GSM = Groupe Special Mobile) an Geräten durchzuführen, und gleichzeitig mit dem separaten bzw. lokalen Übertragungskanal, das ferngewartete Gerät zu bedienen.

Eine weitere Möglichkeit besteht darin, über das mobile Kommunikationsgerät Ergebnisse des fernbetriebenen Gerätes, insbesondere eines Prüfgerätes, an einen Hostrechner zu übermitteln. Damit können gegebenenfalls besonders komplexe Probleme bewältigt werden oder dort besonders interessierende Daten hin übermittelt und gesammelt werden.

Die große Flexibilität vorliegender Erfindung zeigt sich auch darin, dass es mit ihr möglich ist, den für Namenseingaben vorgesehene Editor des mobilen Kommunikationsgeräts bei solchen fernbetriebenen Geräten, die keine eigene alphanumerische Eingabemöglichkeit aufweisen, dazu vorzusehen und einzurichten, um Informationen, wie insbesondere Werbetexte oder Werkstattadressen, für den Ausdruck einzuspielen.

Die Erfindung ermöglicht es in besonders vorteilhafter Weise mit nur einem Kommunikationsmittel sowohl interne als auch externe Telephonate durchzuführen als auch darüber hinaus den Fernbetrieb unterschiedlicher Geräte auf sehr Aufwand und Kosten sparende Weise durchzuführen.

## Patentansprüche

1. Einrichtung zum Fernbetrieb (Remote-Betrieb) von Geräten (2, 3, 5, 52, 22), insbesondere von Prüfgeräten und Prüfständen in der Kraftfahrzeugwartung,
**dadurch gekennzeichnet, dass**
zum Fernbetrieb der Geräte (2, 3, 5, 52, 22) ein mobiles Kommunikationsgerät (1, 12) vorgesehen ist, bei dem neben der verbalen Kommunikation sowie gegebenenfalls der sichtbaren Anzeige von Information, ein separater Übertragungskanal vorgesehen ist,
Signale zur Betätigung der fernbetriebenen Geräte (2, 3, 5, 52, 22), wie insbesondere der Prüf- oder Testgeräte, auf dem separaten Übertragungskanal übertragbar sind,
auf dem Anzeigefeld des mobilen Kommunikationsgeräts (1, 12) entsprechende Aus- und Anwahlmöglichkeiten vorgesehen und eingerichtet sind,
bei Betrieb des mobilen Kommunikationsgeräts (1, 12) als Steuergerät für fernbetriebene Geräte (2, 3, 5, 52, 22) automatisch Eingabemittel des mobilen Kommunikationsgeräts (1, 12) in entsprechende Funktionsmittel verwandelt sind, und jedes fernbetriebene Gerät (2, 3, 5, 52, 22) mit einem Funkmodul versehen ist.

2. Einrichtung nach Anspruch 1, **dadurch gekennzeichnet, dass** das mobile Kommunikationsgerät (1, 12) und das am fernbetriebenen Gerät (2, 3, 5, 52, 22) angeschlossene Funkmodul mit einer Kennung konfiguriert ist.

3. Einrichtung nach Anspruch 1 oder 2, **dadurch gekennzeichnet, dass** die Signale zur Betätigung der fernbetriebenen Geräte (2, 3, 5, 52, 22) mittels desjenigen separaten Übertragungskanals, der als sogenannter lokaler Kanal kostenfrei nutzbar ist, übertragen werden und über die bidirektionale Funkstrecke Zustände und/oder Meßwerte an/von den fernbetriebenen Geräten (2, 3, 5, 52, 22) auf dem Anzeigefeld des mobilen Kommunikationsgeräts (1, 12) anzeigbar sind.

4. Einrichtung nach Anspruch 3, **dadurch gekennzeichnet, dass** der lokale Kanal, der kostenfrei nutzbar ist, mit einer besonderen standardisierten Sende-Empfangs-Frequenz, wie insbesondere DECT (Digital Enhanced Cordless Telecommunication) betreibbar ist oder gemäß dem unter dem Begriff bluetooth gültigen Standard zu betreiben ist.

5. Einrichtung nach Anspruch 1 oder einem der Ansprüche 2 bis 4, **dadurch gekennzeichnet, dass** das mobile Kommunikationsgerät (1) als Modem verwendet ist, um Fernwartung (z.B. GSM = Groupe Special Mobile) an Geräten (2, 3, 5, 52, 22) durchzuführen, und gleichzeitig mit dem separaten bzw. lokalen Übertragungskanal, das ferngewartete Gerät (2, 3, 5, 52, 22) bedienbar ist.

6. Einrichtung nach Anspruch 1 oder einem der Ansprüche 2 bis 5, **dadurch gekennzeichnet, dass** über das mobile Kommunikationsgerät (1, 12) Ergebnisse des fernbetriebenen Gerätes (2, 3, 5, 52, 22), insbesondere eines Prüfgerätes, an einen Hostrechner übermittelbar sind.

7. Einrichtung nach Anspruch 1 oder einem der Ansprüche 2 bis 6, **dadurch gekennzeichnet, dass** der für Namenseingaben vorgesehene Editor des mobilen Kommunikationsgeräts (1, 12) bei solchen fernbetriebenen Geräten (2, 3, 5, 52, 22), die keine eigene alphanumerische Eingabemöglichkeit aufweisen, dazu vorgesehen und eingerichtet ist, um Informationen, wie insbesondere Werbetexte oder Werkstattadressen, für den Ausdruck einzuspielen.

8. Einrichtung nach einem der vorigen Ansprüche, **dadurch gekennzeichnet, dass** das mobile Kommunikationsgerät (1, 12) mit zusätzlicher Programmierung versehen ist, durch welche die besonderen Funktionalitäten ausführbar sind.

9. Einrichtung nach einem der vorigen Ansprüche, **dadurch gekennzeichnet, dass** bei Betrieb des mobilen Kommunikationsgeräts (1, 12) als Steuergerät für fernbetriebene Geräte (2, 3, 5, 52, 22) als Eingabemittel des mobilen Kommunikationsgeräts (1, 12) Eingabetasten oder eine Spracheingabevorrichtung vorgesehen sind und als entsprechende Funktionsmittel Funktionstasten oder eine entsprechend angepasste Sprachausgabevorrichtung vorgesehen sind.

10. Einrichtung nach einem der vorigen Ansprüche, **dadurch gekennzeichnet, dass** als mobiles Kommununikationsgerät ein mobiles Telephon (1), ein sogenanntes Handy, oder ein schnurloses Standardtelephon (12) vorgesehen ist.

11. Einrichtung nach Anspruch 10, **dadurch gekennzeichnet, dass** durch die Basisstation (5, 52) einer Schnurlos-Telephonanlage ein schnurloses lokales Kommunikationsnetzwerk (CLAN = Cordless Local Area Network), insbesondere in einer Werkstatt, realisierbar ist.
